# FASCICULE DE BREVET EUROPEEN

(11) **EP 1 069 038 B1**
(45) Date de publication et mention de la délivrance du brevet: **28.07.2004**
(21) Numéro de dépôt: 00401963.4
(22) Date de dépôt: 07.07.2000
(51) Int. Cl.: B62M 3/08

(54) **Pédale automatique pour cycle tout terrain**
Automatisches Pedal für Mountainbike
Automatic pedal for mountainbike

(30) Priorité: 15.07.1999 FR 9909146
(43) Date de publication de la demande: 17.01.2001
(73) Titulaire: Look Cycle International, 58000 Nevers (FR)
(72) Inventeur: Peyre, Henri, 58270 Saint Benin d'Azy (FR)
(74) Mandataire: Boutin, Antoine

(56) Documents cités:
- EP-A- 0 780 289
- EP-A- 0 826 589
- FR-A- 1 030 485
- FR-A- 2 612 869
- FR-A- 2 746 761
- GB-A- 2 202 499
- US-A- 5 381 708

## Description

L'invention concerne une pédale automatique pour cycle, en particulier pour un cycle de tout terrain (VTT), mais qui peut également être utilisée sur un cycle de route.

Cette pédale automatique est, mais non pas exclusivement, une pédale à double surface de retenue du genre décrit dans la demande de brevet FR 99 00722 de la demanderesse.

La pédale comporte un corps de pédale pourvu d'un alésage taraudé transversal pour la fixation au corps d'un axe relié à une manivelle du pédalier de la bicyclette. Cet axe est de manière classique monté dans un palier logé dans le corps de pédale et permet la rotation de la pédale autour de l'axe lors du pédalage.

Le corps de pédale est muni d'un organe avant d'engagement d'un élément d'accrochage d'une plaque fixée sous la semelle d'une chaussure de cycliste, et d'un organe arrière mobile de retenue de cette plaque. Cet organe arrière est précontraint par un moyen élastique qui habituellement est constitué d'au moins un ressort qui peut être du type hélicoïdal de compression, de torsion, d'extension ou à lame. La pédale comporte par ailleurs souvent un dispositif à came ou à vis permettant le réglage de la tension du moyen élastique.

Dans une pédale de ce genre, l'ensemble constitué par l'organe arrière mobile de retenue, le moyen élastique rappelant cet organe vers sa position de retenue et le dispositif de réglage de la tension du ressort comprend en effet un nombre relativement élevé d'éléments, ce qui demande un temps non négligeable lors de l'assemblage de cet ensemble dans le corps de pédale. Par ailleurs, il faut également prévoir des logements à l'intérieur du corps de pédale pour recevoir tous ces éléments, ce qui en complique la fabrication.

Ainsi, le FR 2 746 761 est un exemple d'une telle pédale dans laquelle un logement est prévu à l'intérieur du corps de pédale afin de recevoir un moyen élastique rappelant l'organe arrière mobile de retenue.

Même si les pédales décrites dans le US 5 381 708 et le GB 2 202 499 proposent d'autres solutions selon lesquelles l'organe arrière mobile de retenue fait partie intégrante du corps de pédale, cela entraîne l'inconvénient de limiter le choix de la matière du corps de pédale et de rendre les éléments difficiles à fabriquer à cause de leurs formes extrêmement complexes. En plus, il s'est avéré que sur des pédales de ce genre, il est très difficile d'obtenir la tension voulue et nécessaire dans l'organe arrière de retenue, ce qui est davantage aggravé par le fait que cette tension ne peut pas être réglée. Pour cette raison, après un certain temps d'utilisation, l'organe arrière a une tendance de lâcher irrémédiablement et toute la pédale doit être remplacée.

Le but de l'invention est de proposer une pédale automatique extrêmement simple et peu onéreuse à fabriquer puisqu'elle comporte un nombre minimal d'éléments, en particulier au niveau de l'organe arrière mobile. Par conséquent, l'assemblage de la pédale est simplifiée et le prix de revient de la pédale en est fortement réduit.

Un autre but de l'invention est de proposer un dispositif de réglage rapide et simple de la dureté du moyen élastique de rappel de l'organe arrière mobile.

L'invention a pour objet une pédale automatique de cycle du type comportant un corps de pédale muni d'un organe avant fixe d'engagement d'un élément d'accrochage fixé sous la semelle d'une chaussure de cycliste, et d'un organe arrière mobile de retenue dudit élément d'accrochage, caractérisée en ce que l'organe arrière de retenue est constitué par un élément élastique comportant une lame métallique fixée à encastrement sur le corps de pédale et travaillant en flexion entre une position fléchie de libération de l'élément d'accrochage et une position de retenue de celui-ci contre une surface de retenue sur le corps de pédale.

Selon d'autres caractéristiques de l'invention :
- la lame est serrée contre le corps de pédale à l'aide d'une plaquette disposée à l'extérieur de la lame et qui définit la ligne de flexion de la lame ;
- la plaquette comporte un évidement débouchant à l'extrémité haute de la plaquette et définissant un espace de flexion pour la lame entre le corps de pédale et la plaquette, le rebord haut de l'évidement limitant la flexion de la lame, tandis que son rebord bas définit ladite ligne de flexion ;
- la plaquette est réglable en hauteur afin de déplacer la ligne de flexion de la lame pour régler la dureté de la lame en modifiant la longueur du bras de levier de celle-ci ;
- la plaquette est, afin de permettre son réglage en hauteur, pourvue d'une lumière oblongue dans laquelle passe une vis de fixation de la lame sur le corps de pédale, en serrant la lame entre le corps de pédale et la plaquette ;
- l'élément élastique a globalement une forme en C et constitue simultanément l'organe avant fixe d'engagement de l'élément de retenue sur une pédale à double plan de retenue ;
- la plaquette et le corps de pédale comportent des moyens d'indexation indiquant une augmentation ou diminution de la dureté de la lame ;
- la lame comporte dans sa partie médiane une découpe en U qui délimite une languette dans laquelle est effectué un trou de fixation de la lame de sorte que la longueur du bras de levier de la partie de lame soumise à déformation soit augmentée;
- la lame comporte dans sa partie médiane une fente allongée, pour que la lame se déforme uniformément, elle est dans cette partie aplatie en biseau ;
- la lame comporte dans sa partie médiane une lumière triangulaire, la partie basse de la lame près du trou 11 de passage de la vis étant plus sollicitée que la partie haute ;
- la lame comporte dans sa partie médiane deux entailles opposées et symétriques qui rétrécissent la lame vers le haut ;
- la lame qui dans sa partie médiane comporte deux entailles opposées et symétriques s'étendant parallèlement l'une à l'autre ;

L'invention sera maintenant décrite plus en détails à l'aide d'un exemple non limitatif de plusieurs modes de réalisation de la pédale selon l'invention en référence aux dessins annexés sur lesquels :
- La figure 1 est une vue de dessus d'une pédale selon l'invention ;
- La figure 2 est une vue arrière de la pédale de la figure 1, montrant les moyens de réglage de la dureté dans la position à dureté élevée ;
- La figure 3 est une vue arrière de la pédale de la figure 1, montrant les moyens de réglage de la dureté dans la position à dureté réduite ;
- La figure 4 est une vue en coupe suivant la ligne A-A de la figure 1 ;
- La figure 5A est une vue dans le plan d'une plaquette de fixation et de réglage selon l'invention ;
- La figure 5B est une coupe longitudinale de la plaquette de la figure 5A ;
- La figure 6A est une vue dans le plan d'un premier mode de réalisation d'un élément constituant un organe arrière mobile de retenue selon l'invention, ainsi qu'un organe fixe d'engagement ;
- La figure 6B est une coupe longitudinale de l'élément de la figure 6A ;
- La figure 7A est une vue dans le plan d'un deuxième mode de réalisation d'un élément constituant un organe arrière mobile de retenue selon l'invention, ainsi qu'un organe fixe d'engagement ;
- La figure 7B est une coupe longitudinale de l'élément de la figure 7A ;
- La figure 8A est une vue dans le plan d'un troisième mode de réalisation d'un élément constituant un organe arrière mobile de retenue selon l'invention, ainsi qu'un organe fixe d'engagement ;
- La figure 8B est une coupe longitudinale de l'élément de la figure 8A ;
- La figure 9A est une vue dans le plan d'un quatrième mode de réalisation d'un élément constituant un organe arrière mobile de retenue selon l'invention, ainsi qu'un organe fixe d'engagement ;
- La figure 9B est une coupe longitudinale de l'élément de la figure 9A ;
- La figure 10A est une vue dans le plan d'un cinquième mode de réalisation d'un élément constituant un organe arrière mobile de retenue selon l'invention, ainsi qu'un organe fixe d'engagement ;
- La figure 10B est une coupe longitudinale de l'élément de la figure 10A.

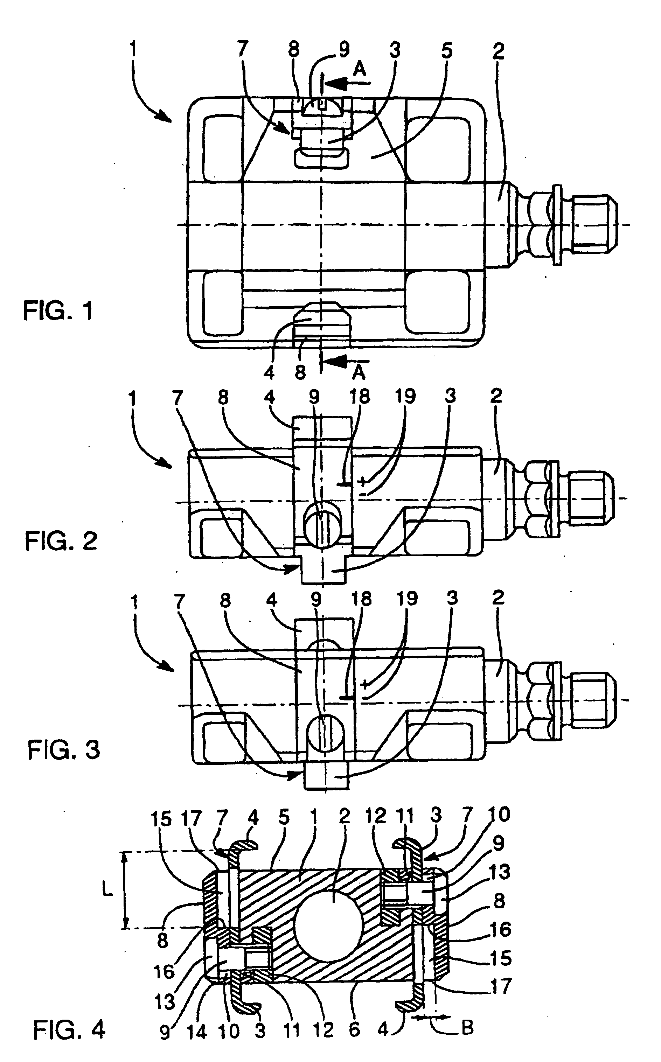

Les figures 1 à 4 montrent une pédale selon l'invention qui comporte un corps de pédale 1, de préférence en une matière plastique, dans lequel un axe de pédale 2 est logé dans des paliers (non représentés) de manière à permettre la rotation de la pédale lors du pédalage. L'axe de pédale 2 est relié par vissage à une manivelle de pédalier (non représentée).

Le corps de pédale 1 est muni d'un organe avant fixe 3 d'engagement d'un élément d'accrochage sous forme d'une plaque fixée sous la semelle d'une chaussure de cycliste (non représenté) et un organe arrière mobile 4 de retenue de cet élément d'accrochage.

Dans l'exemple illustré, la pédale est du type à double plan de retenue 5, 6 de l'élément d'accrochage. La pédale est pourvue de deux éléments opposés dont chacun constitue l'organe avant fixe 3 sur l'un des deux plans de retenue et l'organe arrière mobile 4 sur l'autre plan de retenue.

Chaque élément 7 est constitué d'une lame élastique en métal qui s'étend sur toute l'épaisseur du corps de pédale 1 et qui fait saillie de part et d'autre de celui-ci. Les extrémités de chaque élément 7 sont conformées en crochets dirigés vers l'intérieur de manière à constituer les organes d'engagement et de retenue proprement dits sur les deux plans de retenue.

Chaque lame 7 est encastrée sur le corps de pédale 1 et serrée contre celui-ci à l'aide d'une plaquette 8 disposée à l'extérieur de la lame. La plaquette 8 est fixée au corps de pédale 1 au moyen d'une vis 9 s'étendant à travers une lumière 10 ménagée dans la plaquette 8 et un trou 11 ménagé dans la lame 7 pour être vissée dans un écrou 12 noyé dans le corps de pédale 1.

La tête de vis 13 est logée dans une rainure 14 ménagée dans la partie inférieure externe de la plaquette 8.

La plaquette 8 définit une ligne de flexion sur la largeur de la lame 7 afin de permettre à celle-ci de travailler en flexion entre une position de libération de l'élément d'accrochage de la chaussure de cycliste et une position de retenue de celui-ci. La longueur L du bras de levier correspondant est indiquée à la figure 4.

Afin d'empêcher une déformation irréversible de la lame, la flexion de celle-ci est limitée grâce à un espace de flexion défini par un évidement interne 15 dans la partie supérieure de la plaquette 8. Cet évidement s'étend entre l'extrémité supérieure de la plaquette et se termine vers le bas par un épaulement 16 définissant la ligne de flexion de la lame.

Le rebord supérieur 17 de l'évidement 15 constitue une butée qui limite la flexion de la lame 7. Le battement de la lame est indiquée par la lettre "B" dans la figure 4.

Afin de régler la dureté de la lame 7, la longueur L de son bras de levier peut être modifiée par un déplacement en hauteur de la plaquette 8. Ce déplacement est rendu possible grâce au fait que la lumière 10 de la plaquette est oblongue. La rainure 14 est également oblongue pour permettre à la tête de vis 15 de s'y déplacer. Si la longueur du bras de levier diminue en déplaçant la plaquette 8 vers le haut, la lame devient moins souple.

Ces moyens de réglage de la longueur du bras de levier sont avantageusement associés à des moyens d'indexation qui peuvent tout simplement comprendre un trait repère 18 gravé sur la face externe de la plaquette 8 et des signes moins (-) et plus (+) 19 entre lesquels le trait repère 18 peut être déplacé avec la plaquette pour indiquer une augmentation ou une réduction de la dureté de lame.

La lame élastique 7 doit présenter une rigidité relative au niveau de ses extrémités en crochets, ce qui veut dire que son épaisseur doit être d'au moins 2 mm, alors que dans sa partie médiane, elle doit présenter une grande souplesse pour faire office de ressort.

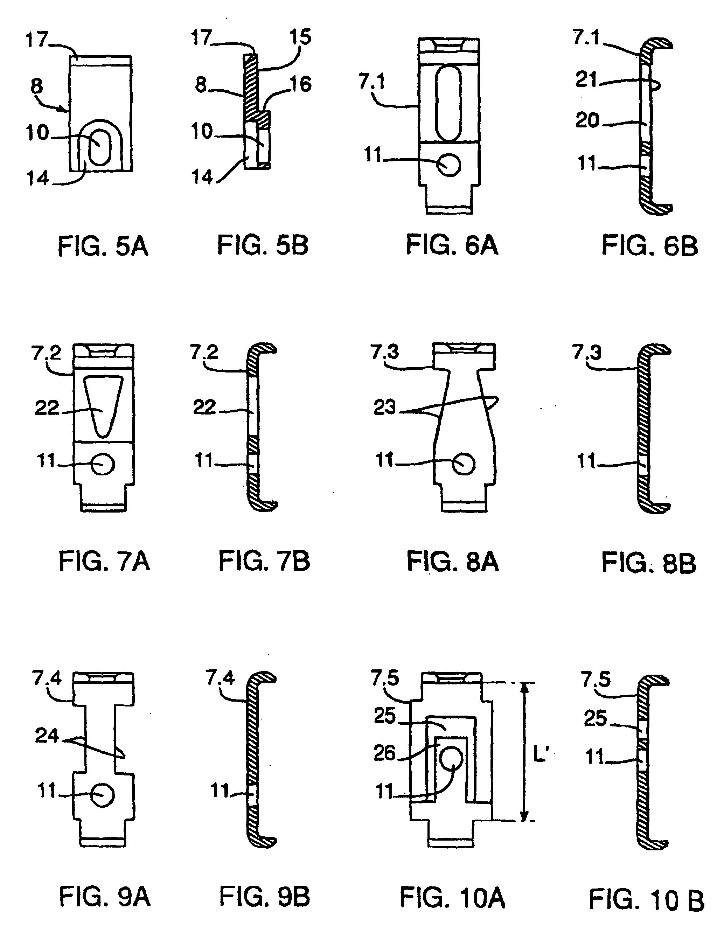

Les figures 6 à 10 montrent cinq variantes de mise en oeuvre de la lame élastique 7 destinées à lui apporter la souplesse souhaitée dans sa partie médiane.

Les figures 6A et 6B montrent une lame 7.1 qui dans sa partie médiane comporte une fente allongée 20 et pour que la lame se déforme uniformément, elle est dans cette partie aplatie en biseau 21.

Les figures 7A et 7B montrent une lame 7.2 qui dans sa partie médiane comporte une lumière triangulaire 22 pour que la déformation soit harmonieuse, la partie basse de la lame près du trou 11 de passage de la vis 9 étant plus sollicitée que la partie haute.

Les figures 8A et 8B montrent une lame 7.3 qui dans sa partie médiane comporte deux entailles 23 opposées et symétriques qui rétrécissent la lame vers le haut.

Les figures 9A et 9B montrent une lame 7.4 qui dans sa partie médiane comporte deux entailles 24 opposées et symétriques s'étendant parallèlement l'une à l'autre.

Finalement, les figures 10A et 10B montrent une lame 7.5 qui dans sa partie médiane comporte une découpe en U 25 qui délimite une languette 26 dans laquelle est effectué le trou de fixation 11. Cela a pour conséquence que la longueur L' du bras de levier de la partie de lame soumise à déformation est augmentée par rapport à la longueur L représentée à la figure 4.

La pédale selon l'invention est particulièrement facile à assembler, d'autant plus que le nombre de pièces est extrêmement limité.

D'autres modes de réalisation sont possibles sans pour autant sortir du cadre de l'invention. Il est par exemple simple d'appliquer l'invention sur une pédale à simple face de retenue.

## Revendications

1. Pédale automatique de cycle du type comportant un corps de pédale (1) muni d'un organe avant fixe (3) d'engagement d'un élément d'accrochage fixé sous la semelle d'une chaussure de cycliste, et d'un organe arrière mobile (4) de retenue dudit élément d'accrochage, **caractérisée en ce que** l'organe arrière de retenue (4) est constitué par un élément élastique (7) comportant une lame métallique fixée à encastrement sur le corps de pédale (1) et travaillant en flexion sur sa largeur entre une position fléchie de libération de l'élément d'accrochage et une position de retenue de celui-ci contre un plan de retenue (6, 7) sur le corps de pédale (1).

2. Pédale automatique selon la revendication 1, **caractérisée en ce que** la lame (7) est serrée contre le corps de pédale (1) à l'aide d'une plaquette (8) disposée à l'extérieur de la lame (7) et qui définit la ligne de flexion de la lame.

3. Pédale automatique selon la revendication 2, **caractérisée en ce que** la plaquette (8) comporte un évidement (15) dans la partie supérieure de la plaquette définissant un espace de flexion pour la lame (7) entre le corps de pédale (1) et la plaquette (8), le rebord supérieur (17) de l'évidement (15) constituant une butée limitant la flexion de la lame(7), tandis que son rebord inférieur (16) définit ladite ligne de flexion.

4. Pédale automatique selon la revendication 2 ou 3, **caractérisée en ce que** la plaquette (8) est réglable en hauteur afin de déplacer la ligne de flexion de la lame pour régler la dureté de la lame (7) en modifiant la longueur (L) du bras de levier de celle-ci.

5. Pédale automatique selon la revendication 4, **caractérisée en ce que** la plaquette (8) est, afin de permettre son réglage en hauteur, pourvue d'une lumière oblongue (10) dans laquelle passe une vis de fixation (9) de la lame (7) sur le corps de pédale (1), en serrant la lame entre le corps de pédale (1) et la plaquette (8).

6. Pédale automatique selon l'une quelconque des revendications précédentes, **caractérisée en ce que** l'élément élastique (7) a globalement une forme en C et constitue également l'organe avant fixe (3) d'engagement de l'élément de retenue sur une pédale à double plan de retenue.

7. Pédale automatique selon l'une quelconque des revendications 4 à 6, **caractérisée en ce que** la plaquette (8) et le corps de pédale (1) comportent des moyens d'indexation (18, 19) indiquant une augmentation ou diminution de la dureté de la lame (7).

8. Pédale automatique selon l'une quelconque des revendications précédentes, **caractérisée en ce que** la lame (7.5) comporte dans sa partie médiane une découpe en U (25) qui délimite une languette (26) dans laquelle est effectué un trou de fixation (11) de la lame de sorte que la longueur du bras de levier de la partie de lame soumise à déformation soit augmentée.

9. Pédale automatique selon l'une quelconque des revendications 1 à 7, **caractérisée en ce que** la lame (7.1) comporte dans sa partie médiane une fente allongée (20), pour que la lame se déforme uniformément, elle est dans cette partie taillée en biseau (21).

10. Pédale automatique selon l'une quelconque des revendications 1 à 7, **caractérisée en ce que** la lame (7.2) comporte dans sa partie médiane une lumière triangulaire (22), la partie basse de la lame près du trou (11) de passage de la vis (9) étant plus sollicitée que la partie haute.

11. Pédale automatique selon l'une quelconque des revendications 1 à 7, **caractérisée en ce que** la lame (7.3) comporte dans sa partie médiane deux entailles (23) opposées et symétriques qui rétrécissent la lame vers le haut.

12. Pédale automatique selon l'une quelconque des revendications 1 à 7, **caractérisée en ce que** la lame (7.4) qui dans sa partie médiane comporte deux entailles (24) opposées et symétriques s'étendant parallèlement l'une à l'autre.

## Claims

1. Automatic bicycle pedal of the type comprising a pedal body (1) provided with a front fixed member (3) for engagement with a hooking element fixed below the sole of a cyclist's shoe, and with a rear movable member (4) for retaining said hooking element, **characterised in that** the rear retaining element (4) consists of a resilient element (7) comprising a metal blade fixed in a containing manner on the pedal body (1) and operating by bending over its width between a bent position to free the hooking element and a retaining position for the hooking element against a retaining plane (6, 7) on the pedal body (1).

2. Automatic pedal according to claim 1, **characterised in that** the blade (7) is gripped against the pedal body (1) with the aid of a plate (8) disposed outside the blade (7) and which defines the bending line of the blade.

3. Automatic pedal according to claim 2, **characterised in that** the plate (8) comprises a recess (15) in the upper part of the plate defining a bending space for the blade (7) between the pedal body (1) and the plate (8), the upper edge (17) of the recess (15) constituting a stop limiting the bending of the blade (7), while its lower edge (16) defines said bending line.

4. Automatic pedal according to claim 2 or 3, **characterised in that** the plate (8) is height-adjustable so as to move the bending line of the blade to adjust the hardness of the blade (7) by modifying the length (L) of the lever arm of the blade (7).

5. Automatic pedal according to claim 4, **characterised in that** the plate (8), so as to allow its height adjustment, is provided with an oblong opening (10) through which passes a fixing screw (9) for the blade (7) on the pedal body (1), by gripping the blade between the pedal body (1) and the plate (8).

6. Automatic pedal according to any one of the preceding claims, **characterised in that** the resilient element (7) overall has a C-shape and also constitutes the front fixed member (3) for engagement with the retaining element on a pedal with a double retaining plane.

7. Automatic pedal according to any one of claims 4 to 6, **characterised in that** the plate (8) and the pedal body (1) comprise indexing means (18, 19) indicating an increase or decrease in the hardness of the blade (7).

8. Automatic pedal according to any one of the preceding claims, **characterised in that** the blade (7.5) in its median portion comprises a U-shaped cutout (25) which delimits a tongue (26) in which is provided a fixing hole (11) for the blade such that the length of the lever arm of the blade portion subjected to deformation is increased.

9. Automatic pedal according to any one of claims 1 to 7, **characterised in that** the blade (7.1) in its median portion comprises an elongated slot (20), so that the blade deforms uniformly; it is bevelled (21) in this portion.

10. Automatic pedal according to any one of claims 1 to 7, **characterised in that** the blade (7.2) comprises in its median portion a triangular opening (22), the lower portion of the blade close to the hole (11) for the passage of the screw (9) being more strongly stressed than the upper part.

11. Automatic pedal according to any one of claims 1 to 7, **characterised in that** the blade (7.3) comprises in its median portion, two opposing and symmetrical cutouts (23) which narrow the blade upwardly.

12. Automatic pedal according to any one of claims 1 to 7, **characterised in that** the blade (7.4) in its median section, comprises two opposing and symmetrical cutouts (24) extending parallel to one another.

## Patentansprüche

1. Automatisches Fahrradpedal mit einem Pedalkörper (1), der mit einem feststehenden, vorderen Bindungsorgan (3) für den Eingriff mit einem Befestigungselement, das unter der Sohle eines Fahrradschuhs befestigt ist, versehen ist, sowie mit einem bewegbaren hinteren Halteorgan (4) für dieses Befestigungselement versehen ist,
**dadurch gekennzeichnet,**
**dass** das hintere Halteorgan (4) von einem Federelement (7) gebildet wird, das aus einem Metallstäbchen besteht, das durch Einstecken an dem Pedalkörper (1) befestigt ist und funktioniert, indem es sich in seiner Länge zwischen einer gebogenen Stellung, in der das Befestigungselement freigegeben ist, und einer Stellung, in der dieses an einer Halteebene (6, 7) an dem Pedalkörper (1) festgehalten wird, verbiegt

2. Automatisches Pedal nach Anspruch 1,
**dadurch gekennzeichnet,**
**dass** das Metallstäbchen (7) mittels eines Plättchens (8), das außerhalb des Stäbchens (7) angeordnet ist und die Biegungslinie des Stäbchens bestimmt, an dem Pedalkörper (1) festgeklemmt wird.

3. Automatisches Pedal nach Anspruch 2,
**dadurch gekennzeichnet,**
**dass** das Plättchen (8) in seinem oberen Teil eine Aussparung (15) aufweist, die einen Biege-Zwischenraum für das Stäbchen (7) zwischen dem Pedalkörper (1) und dem Plättchen (8) bildet, wobei der obere Rand (17) der Aussparung (15) einen Anschlag bildet, der die Biegung des Stabchens (7) begrenzt, während ihr unterer Rand (16) die genannte Biegungslinie bestimmt.

4. Automatisches Pedal nach Anspruch 2 oder 3,
**dadurch gekennzeichnet,**
**dass** das Plattchen (8) höhenverstellbar ist, um die Biegungslinie des Stäbchens zu verschieben, so dass die Festigkeit des Stäbchens (7) durch Ändern der Länge (L) ihres Hebelarms eingestellt wird

5. Automatisches Pedal nach Anspruch 4,
**dadurch gekennzeichnet,**
**dass** das Plättchen (8), um hohenverstellbar zu sein, mit einer länglichen Öffnung (10) versehen ist, in die eine Befestigungsschraube (9) zur Befestigung des Stäbchens (7) an dem Pedalkörper (1) ragt, wobei das Stäbchen zwischen dem Pedalkörper (1) und dem Plättchen (8) festgeklemmt wird.

6. Automatisches Pedal nach einem der vorherigen Ansprüche,
**dadurch gekennzeichnet,**
**dass** das Federelement (7) insgesamt C-förmig gebildet ist und auch das feststehende, vordere Bindungsorgan (3) für den Eingriff mit dem Befestigungselement an einem Pedal mit doppelter Halteebene bildet.

7. Automatisches Pedal nach einem der Ansprüche 4 bis 6,
**dadurch gekennzeichnet,**
**dass** das Plättchen (8) und der Pedalkörper (1) Indexierungsmittel (18, 19) aufweisen, die eine Erhöhung oder Verringerung der Festigkeit des Stäbchens (7) anzeigen.

8. Automatisches Pedal nach einem der vorherigen Ansprüche,
**dadurch gekennzeichnet,**
**dass** das Stäbchen (7.5) in seinem mittleren Teil einen U-förmigen Ausschnitt (25) enthält, der eine Zunge (26) abgrenzt, in der ein Befestigungsloch (11) für das Stäbchen dergestalt vorgesehen ist, dass die Länge des Hebelarms des einer Verformung unterliegenden Teils des Stabchens erhöht wird.

9. Automatisches Pedal nach einem der Ansprüch11 bis 7,
**dadurch gekennzeichnet,**
**dass** das Stäbchen (7.1) in seinem mittleren Teil einen Längsschlitz (20) aufweist, damit sich das Stabchen gleichmäßig verformt, und in diesem Teil schräg geschnitten (21) ist.

10. Automatisches Pedal nach einem der Anspruche 1 bis 7,
**dadurch gekennzeichnet,**
**dass** das Stabchen (7.2) in seinem mittleren Teil eine dreieckige Öffnung (22) aufweist, wobei der untere Teil des Stabchens in der Nahe des Durchlasslochs (11) fur die Schraube (9) stärker belastet wird als der obere Teil.

11. Automatisches Pedal nach einem der Ansprüche 1 bis 7,
**dadurch gekennzeichnet,**
**dass** das Stäbchen (7.3) in seinem mittleren Teil zwei einander gegenuber liegende und symmetrische Einschnitte (23) aufweist, durch die sich das Stäbchen nach oben verjüngt.

12. Automatisches Pedal nach einem der Ansprüche 1 bis 7,
**dadurch gekennzeichnet,**
**dass** das Stäbchen (7.4) in seinem mittleren Teil zwei einander gegenüber liegende und symmetrische Einschnitte (24) aufweist, die parallel zueinander liegen.
